# EUROPÄISCHE PATENTSCHRIFT

(11) **EP 1 509 681 B1**
(45) Veröffentlichungstag und Bekanntmachung des Hinweises auf die Patenterteilung: **25.07.2007**
(21) Anmeldenummer: 03729853.6
(22) Anmeldetag: 30.04.2003
(51) Int. Cl.: G05D 7/01, G05D 16/10

(54) **DRUCK- UND STROMREGELUNGSVENTIL**
PRESSURE AND FLOW CONTROL VALVE
SOUPAPE DE REGULATION DE PRESSION ET DE FLUX

(30) Priorität: 02.05.2002 DE 10219703; 11.07.2002 DE 10231239
(43) Veröffentlichungstag der Anmeldung: 02.03.2005
(73) Patentinhaber: Voss, Wolfgang, 58239 Schwerte (DE)
(72) Erfinder: Voss, Wolfgang, 58239 Schwerte (DE)
(74) Vertreter: Schulte, Jörg
(86) Internationale Anmeldenummer: PCT/DE2003/001391
(87) Internationale Veröffentlichungsnummer: WO 2003/093645

(56) Entgegenhaltungen:
- DE-A- 19 537 448
- GB-A- 606 623
- US-A- 3 196 901
- GUILLON M: "LA REGULATION HYDRAULIQUE" ENERGIE FLUIDE, CFE. PARIS, FR, 1995, Seiten 8-13, XP000554452 ISSN: 0291-8331

## Beschreibung

Die Erfindung betrifft ein Ventil für die Druck- und Volumenstromreduzierung bei Druckflüssigkeitsverbrauchern des untertägigen Berg- und Tunnelbaus mit einem den Druck und die Menge reduzierende Teile in seiner Durchgangsbohrung aufnehmenden Ventilgehäuse.

Aus der Ölhydraulik und der Dampfdrucktechnik ist es seit vielen Jahren bekannt, durch Zuschaltung einer Druckmindereinrichtung aus einem einzigen Kreislauf Verbraucher mit hohem Druck und mit einem entsprechend reduzierten Systemdruck zu versorgen. Aus. "Einführung in die Ölhydraullk", Teubner Verlag Stuttgart, 1984, Seite 137, ist ein Schaltbild bekannt, wo eine solche Druckmindereinrichtung erklärt und gezeigt ist Aus der "Hydrauliktrainer", Lehr- und Informationsbuch über die Hydraulik, Copyright 1978 bei G. L. Rexroth GmbH auf Seite 122 ist erläutert, dass mit einem Druckreduzierventil der Sekundärdruck, d.h. der Ausgangsdruck begrenzt wird. Der Sekundärdruck wird unabhängig vom Eingangsdruck sobald dieser den eingestellten Wert überschreitet konstant gehalten. Man kann also nach diesem Stand der Technik den Druck in einem Teil eines Kreislaufs auf einen niedrigeren Wert als den Systemdruck reduzieren. Ähnlich sind Dampfdruckreduzierventile mindestens seit 1925 bekannt ("Die Praxis des modernen Maschinenbaus", Verlag von C. U. Weller). Auf Seite 491 ist erläutert, dass diese bekannten Dampfdruckreduzierventile den Zweck haben, den auf dem Kessel lastenden normalen Druck in gewissen Fällen dem nachgeschaltenten Verbraucher entsprechend zu vermindern. Das dafür seinerzeit verwendete Ventil ist in diesem Stand der Technik ausführlich erläutert Im untertägigen Berg- und Tunnelbau aber auch in anderen Bereichen werden mehrere hintereinander liegende Verbraucher und einen unterschiedlichen Bedarf aufweisende Verbraucher häufig dennoch mit einer Versorgungsleitung mit dem Druckerzeuger verbunden. Um die unterschiedlichen Bedürfnisse befriedigen zu können, wird die Versorgungsleitung entsprechend dem Höchstdruckverbraucher mit Druckflüssigkeit beschickt Ein entsprechend hoher Druck wird häufig auch eingestellt, wenn eine Vielzahl von Verbrauchern vorgesehen ist. Für die einen niedrigeren Druck benötigenden Verbraucher wird dann die Druckflüssigkeit falls möglich und notwendig auf den entsprechenden geringeren Druck herab reduziert (DE-A-195 37 448 und DE-U-295 21 969). Bekannt sind solche Druckreduzierventile, bei denen über einen entsprechend ausgebildeten Kolben der Druck so weit reduziert wird, dass wenigstens in etwa der vom Verbraucher benötigte Druck bereitgestellt wird. Schwierig dabei ist es, diesen reduzierten Druck über den Bedarfszeitraum hinweg genau einzuhalten, insbesondere dann, wenn an einer solchen Versorgungsleitung mehrere Verbraucher hängen. Dies ist insbesondere im untertägigen Bergbau dann der Fall, wenn das mit rund 100 bar in den Streb geschickte Druckwasser sowohl für die Staubniederschlagung hinter den Schilden (im Bruch) wie auch vor den Schilden (in der Fahrgasse) benötigt wird. Zwar ist es bekannt, bei diesen Einsatzbereichen für die im Bereich der Hobelgasse bzw. der Gewinnungsgasse eingesetzten Düsen ein entsprechend runterreduzierten Wasserdruck zur Verfügung zu stellen und zwar von etwa 20 bar, wobei es bisher aber nicht möglich ist, diese auch eine geringere Menge an Wasser benötigten Düsen richtig zu versorgen. Allenfalls wird dies dadurch möglich, dass ein gesondertes Stromregelungsventil zum Einsatz kommt, das entweder vor oder nach der Druckreduzierung zum Einsatz kommt und die Menge entsprechend einstellt. Abgesehen davon, dass hierfür ein gesondertes Ventil benötigt wird, ist es immer problematisch, diese unterschiedlichen Ventile so aufeinander einzustellen und einzuspielen, dass damit die Versorgung der Staubbekämpfungsdüsen mit dem richtigen Wasserdruck und der richtigen Wassermenge gewährleistet ist. Auch die US 3,196,901 A und die GB 606 623 A zeigen so genannte Sitzventile, die mit winzigen Hüben große Öffnungsquerschnitte öffnen und schließen. Wird der Kolben angehoben, fließt ein mengenmäßig nicht regelbarer Mediumstrom in Richtung Niederdruckteil.

Der Erfindung liegt daher die Aufgabe zugrunde, insbesondere bei der Staubbekämpfung mit Düsen im untertägigen Berg- und Tunnelbau ein Ventil zur Verfügung zu stellen, das auf einfache und sichere Art und Weise aus der Hochdruckversorgungsleitung Wasser zur Verfügung stellt, das sowohl bezüglich Druck wie auch Menge genau auf die Bedürfnisse der jeweiligen Düsen eingestellt werden kann und Im Aufbau einfach ist.

Die Aufgabe wird gemäß der Erfindung durch die Merkmale des Anspruches 1 gelöst.
Mit Hilfe eines derart ausgebildeten Ventils ist es möglich, den Druck der Hochdruckflüssigkeit in der Versorgungsleitung so weit herunterzudrücken, dass beispielsweise die Druckflüssigkeit mit ihren ursprünglichen 100 bar nur noch 20 bar aufweist und dann der Düse zur Verfügung gestellt wird, wobei gleichzeitig die Menge so eingestellt wird, wie dies für die Wirkungsweise der Düse optimal ist. Die Ausbildung des Ventils sichert dabei, dass die einmal eingestellten Werte für den gesamten Einsatz auch sicher einzuhalten sind. Damit ist es erstmals möglich, bei derartigen Einrichtungen im untertägigen Bergbau, die für einen sicheren Betrieb ausgesprochen wichtig und notwendig sind, Einrichtungen bzw. Ventile zur Verfügung zu stellen, die im Optimumbereich der jeweiligen Düse sowohl bezüglich des Druckes wie auch der Menge arbeiten und damit eine sehr effektive Staubbekämpfung sicherstellen- Das den Hochdruckteil passierende Druckmedium wird durch den Drosselspalt auf eine jeweils den Bedürfnissen entsprechende Menge eingestellt, wobei gleichzeitig durch die Wahl der Bemessungen von Hochdruckteil und Niederdruckteil auch die gewünschte Reduzierung des Druckes verwirklicht wird. Damit kann mit einem einzigen Ventil auch damit auf kürzestem Wege hinter der Hochdruckleitung bereits ein Medium zur Verfügung gestellt werden, das für die Staubbekämpfung im Gewinnungsbereich sich optimal eignet. Das Ventil ist einfach aufgebaut und arbeitet sicher und genau. Der einen kleineren Durchmesser aufweisende Hochdruckteil wird zunächst in Strömungsrichtung von der Druckflüssigkeit durchströmt, um dann in der Menge und in der Druckhöhe eingeregelt zu werden. Denkbar ist es zwar auch, den Hochdruckteil hinter dem Niederdruckteil anzuordnen, doch sind dann gesonderte Gehäusebohrungen und Zusatzautwände erforderlich, was nicht unbedingt die Sicherheit eines derartigen Ventils erhöht

Nach einer zweckmäßigen Ausbildung der Erfindung ist vorgesehen, dass der Hochdruckteil und der Niederdruckteit mit den Radialbohrungen mit ihren geschlossenen Kolbenköpfen aufeinander stehend in der Durchgangsbohrung angeordnet sind. Die Druckflüssigkeit, d. h. das Hochdruckwasser fließt somit zunächst durch den Hochdruckteil mit seiner Axial- und seinen Radialbohrungen, um dann durch den Drosselspalt hindurchgeführt und auch mengenmäßig geregelt zu werden. Der nachfolgende Niederdruckteil sorgt dann weiter für die entsprechende Druckreduzierung, wobei das kleinere Hochdruckteil dabei über das größere Niederdruckteil in eine Position gebracht und gehalten wird, die nur eine ganz begrenzte Menge an Druckflüssigkeit passieren lässt und zwar durch den Drosselspalt, sodass eine sehr gleichmäßige Mengenreduzierung eintritt. Damit ist sichergestellt, dass über den Düsungsvorgang gesehen immer die Druckflüssigkeit mit der gleichen optimalen Menge zur Verfügung steht, wobei gleichzeitig über die unterschiedlich bemasten Kolben und Kolbenteile auch die Druckreduzierung sichergestellt ist. Während des Betriebes bedarf es also keiner Messungen oder zusätzlicher Einrichtungen, um diese günstige Menge und den günstigen Druck zu gewährleisten. Die mit den Kolbenköpfen aufeinander stehend angeordneten Kolben beeinflussen sich dabei so, dass während des Bedüsungsvorganges bezüglich Druck und Menge die Einstellung wie schon erwähnt beibehalten wird, während nach dem Schließvorgang des Schaltventils, was in der Regel vorgeschaltet ist, der Druck im "System" abfällt, sodass dann sich der Druck entsprechend reduziert und der kleinere Hochdruckteil in eine Position kommt, die beim Wiedereinschalten dafür sorgt, dass der Bereich zwischen Druckreduzierventil und Düse sehr schnell mit Druckflüssigkeit gefüllt wird, sodass dann sich das Ventil sehr schnell in die beschriebene Regulierungsposition begibt und dafür sorgt, dass bezüglich Menge und Druck genau die Druckflüssigkeit vorgehalten und zur Verfügung gestellt wird, die für die Staubbekämpfung gewünscht wird. Es versteht sich, dass diese Einstellung und Regelung des Druckes und der Menge auch für andere Einsatzzwecke vorteilhaft ist und entsprechend eingestellt werden kann, indem die Durchmesser und der Drosselspalt entsprechend aufeinander abgestimmt werden.

Um den Übertritt vom Hochdruck- auf den Niederdruckteil sicherzustellen ist vorgesehen, dass der Niederdruckteil und der Hochdruckteil im Bereich einer Erweiterung der Durchgangsbohrung aufeinander stehend angeordnet sind, die eine dem Verschiebeweg des Niederdruckteils entsprechende und das Weiterströmen der Druckflüssigkeit durch die sichernde Länge aufweist. Damit wird die Druckflüssigkeit über den Hochdruckteil und den ihn umgebenden Drosselspalt zunächst in die Erweiterung strömen und von dort aus über die Radialbohrungen des Nieder druckteils in die Axialbohrung und weiter in die Leitung zur Düse. Der Niederdruckteil kann dabei nur so weit einfahren, dass die Radialbohrungen innerhalb der Erweiterung verbleiben, sodass von dort aus die Druckflüssigkeit immer über den Niederdruckteil weiterströmen kann.

Zur Sicherung der Druckreduzierung und um ein gleichmäßiges Weiterströmen der Druckflüssigkeit sicherzustellen, ist ergänzend vorgesehen, dass der Niederdruckteil mehr Radialbohrungen und damit einen größeren Öffnungsquerschnitt aufweist, als der Hochdruckteil. Dieser Öffnungsquerschnitt wird insbesondere durch die zum Einsatz kommenden Radialbohrungen verwirklicht, wobei der Niederdruckteil einfach etwa die doppelte Anzahl an Radialbohrungen aufweist wie der Hochdruckteil.

Bei den bei der Staubbekämpfung benötigten Mengen an Druckflüssigkeit und zwar an reduzierter Druckflüssigkeit ist es zweckmäßig, wenn der Drosselspalt zylindrisch und einen Hub von rund 10 mm zulassend ausgebildet ist. Hierbei wird erreicht, dass ein sehr gleichmäßiges Abströmen der Druckflüssigkeit durch den Drosselspalt sichergestellt ist, sodass sich keine nachteiligen Wirbel oder sonstige Problemsituationen einstellen können und wobei immer eine ausreichende Drosselspaltlänge vorgegeben ist, auch dann, wenn der kleinere Hochdruckkolben bzw. das Hochdruckteil entsprechend in der Gehäusebohrung verschoben worden ist.

Der Niederdruckteil soll den Hochdruckteil nach Erreichen des Druckes in der Leitung in die Durchgangsbohrung zurückdrücken, damit der Drosselspalt wirksam bleibt. Dies erreicht man sicher dadurch, dass die größere Stufe des Niederdruckteils dem Niederdruckanschluss zugeordnet ist. Dadurch steht hier eine entsprechend große Fläche zur Verfügung, die dafür sorgt, dass der Niederdruckteil den Hochdruckteil bei Erreichen des entsprechenden Druckes entsprechend zurückschiebt. Der Niederdruckteil selber kann aufgrund seiner gestuften Ausbildung nur so weit ausfahren, wie dies durch die beiden Stufen vorgegeben ist, wodurch auch ein Festsetzen des Hochdruckteils verhindert ist. Vielmehr bleiben beide Kolben in einer Position, die ein entsprechendes Verschieben in Flussrichtung oder entgegen der Flussrichtung möglich macht.

Das Hin- und Herbewegen des Niederdruckteils wird dadurch weiter gesichert, dass der Niederdruckteil im Bereich der größeren Stufe eine Nut und einen O-Ring aufweist. Dadurch ist sichergestellt, dass Druckflüssigkeit nicht am Stufenkolben bzw. Niederdruckteil vorbeiströmen kann, sondern vielmehr den Niederdruckteil gegen den Hochdruckteil schiebt, um diesen in seine Durchgangsbohrung zurückzuschieben. Dazu ist weiter vorgesehen, dass in die Wandung der Durchgangsbohrung eine die kleinere Stufe des Niederdruckteils abdichtende Dichtung mit O-Ring eingelassen ist. Hierdurch kann die Druckflüssigkeit auch in diesem Bereich nicht in den Spalt zwischen Niederdruckteil und Durchgangsbohrung einströmen.

Der Niederdruckteil kann beim Öffnen des Ventils durch den Hochdruckteil bis an seinen Anschlag herangefahren werden. Um dann einen Start bei entsprechend erreichter Drucksituation sicherzustellen, ist vorgesehen, dass der Niederdruckteil am dem Niederdruckanschluss zugewandten Anschlagende eine Startradialbohrung oder eine Nut aufweist. Diese Startradialbohrung sorgt dafür, dass Druckflüssigkeit hinter das Anschlagende strömen kann, um für das Ausfahren des Niederdruckteils zu sorgen.

Das gleichmäßige Ein- und Ausfahren des Niederdruckteils wird weiter dadurch gesichert, dass zwischen den beiden hydraulischen Stufen des Stufenkolbens eine radial verlaufende Belüftungsbohrung vorgesehen ist. Über diese Belüftungsbohrung zieht der Niederdruckteil Luft aus der Atmosphäre an, wenn er über den Hochdruckteil in seine Ausgangsposition zurückgeschoben wird. Beim umgekehrten Bewegungsvorgang wird dann Luft nach außen in die Atmosphäre gedrückt, sodass die Bewegung des Niederdruckteils optimal erhalten und gesichert ist.

Um das Eindringen von Staub oder anderen Problemstoffen durch die Belüftungsbohrung zu verhindern und damit die Oberfläche des Niederdruckteils vor Beschädigung zu sichern, ist vorgesehen, dass die Belüftungsbohrung einen Staubschutzverschluss aufweist. Denkbar ist es hier, dass ein Gummiring oder ein Gummischlauch aufgeschoben ist, der das Durchströmen von Luft möglich macht, wobei das Ansaugen von Staub oder ähnlichen Bestandteilen ausgeschlossen wird.

Das Einsetzen in eine Hydraulikleitung oder ähnliche Leitung wird dadurch erleichtert und auch ein Austausch ermöglicht, dass das Ventilgehäuse mit der Durchgangsbohrung beidseitig mit einer Muffenführung mit DN 10 Steckanschluss ausgerüstet ist. Natürlich kann auch ein anders dimensionierter Steckanschluss verwendet werden, doch ist insbesondere im untertägigen Bergbau der DN 10 Anschluss der meist zum Einsatz kommende. Durch diese Ausrüstung des Gehäuses kann das entsprechende Druckreduzierventil einfach eingesetzt werden und auch bei Bedarf ausgetauscht werden, beispielsweise wenn das Reduzierverhältnis geändert werden soll, denn dieses ist durch die Bemessung von Hochdruckteil, Niederdruckteil und der sonstigen Einzelheiten vorgegeben. Ein einfacher und zweckmäßiger Aufbau des entsprechenden Druckbegrenzungsventils ist dabei gegeben, wenn die Muffenführungen in das Gehäuse einschraubbar ausgebildet und entsprechend abgedichtet sind. Damit können handelsübliche Muffenführungen verwendet werden, die einfach in das Gehäuse eingeschraubt und dann so festgesetzt und abgedichtet werden, dass das Ventil seine Funktion sicher ausführen kann. Zwar wird es zweckmäßig sein, den Hochdruckteil in die zugeordnete Muffenführung einzubauen, d.h. dort eine entsprechende besondere Bohrung vorzusehen, weil dann auf dieser Seite des Gehäuses keine besonderen Einbauten notwendig sind. Die beiden zum Einsatz kommenden Kolben können dann einfach eingesetzt und das Druckreduzierventil durch Zusammensetzen bzw. Zusammenschrauben fertig gestellt werden. In aller Regel wird dies Übertage im Herstellerwerk erfolgen, doch kann bei Bedarf auch Untertage eine Überprüfung vorgenommen oder ggf. sogar Reparaturen durchgeführt werden, weil das Ventil einfach und übersichtlich aufgebaut ist

Für Verbraucher, die hydraulisch dicht sein sollen, ist es von Vorteil, wenn im Bereich des Drosselspaltes ein von den Radialbohrungen des Hochdruckteiles überfahrbarer O-Ring vorgesehen ist. Dieser O-Ring ist in die Wandung der Durchgangsbohrung eingelassen, wozu dieser eine Nut aufweist und dafür sorgt, dass über den Drosselspalt erst Druckflüssigkeit in die Erweiterung eindringen kann, wenn der O-Ring entsprechend durch das Hochdruckteil überfahren ist.

Die Erfindung zeichnet sich insbesondere dadurch aus, dass ein Druckreduzier- und Volumenregelungsventil geschaffen ist, das gerade im untertägigen Berg- und Tunnelbau dort vorteilhaft eingesetzt werden kann, wo mit relativ hohen Drücken die benötigte Druckflüssigkeit, d. h. in der Regel Wasser in den Streb hinein gepumpt wird. Dort wird es an den jeweiligen Verbraucher bzw. kurz vor ihm so weit reduziert und mengenmäßig eingestellt, dass an der jeweiligen Düse genau die Menge mit einem Druck austritt, wie er zweckmäßig ist, um den Nebel zu erzeugen, der zum richtigen und sicheren Niederschlagen des entstandenen Kohten/Steinstaubes beiträgt bzw. zwangsweise führt. Überraschend und vorteilhaft dabei ist, dass mit Hilfe des entsprechenden einzigen zum Einsatz kommenden Ventils nicht nur der Druck beispielsweise von 100 auf 20 bar reduziert wird, sondern gleichzeitig auch die Austrittsmenge mit vorgegeben bzw. eingestellt wird, so wie dies für die jeweiligen Staubniederschlagsdüsen richtig ist. Bei dem Verhältnis 100 : 20 bar kann die Menge auf 1 bis 30 I, hier vorzugsweise etwa 5 1 eingestellt werden. Damit entsteht ein Strahl am Austrittsende der Düse, der zu einem Nebel führt, der genau die Tröpfchengröße aufweist, wie sie zum Niederschlagen des Kohlen- und Steinstaubes notwendig ist. Vorteilhaft ist weiter, dass ein solches Ventil einfach in die vorhandene Leitung eingesetzt werden kann, vorzugsweise unmittelbar hinter einem Schaltventil oder evtl. ohne ein solches, sodass schon die Leitung Innerhalb eines Ausbaugestelles zur Kappenspitze hin nur noch unter den 20 bar steht, sodass sich insgesamt optimale Verhältnisse ergeben. Das Druck- und Mengenreduzierventil kann auch durch andere ausgetauscht und einfach repariert werden, weil es aus wenigen Bauteilen besteht, wobei die sich hin- und herbewegenden Bauteile so in einem Gehäuse untergebracht sind, dass sie weder von außen her beeinträchtigt werden können, noch andere Einrichtungen insbesondere aber Menschen beeinträchtigen.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteiten dargestellt ist. Es zeigen:
- Figur 1: einen Längsschnitt durch ein Druckreduzierventil,
- Figur 2: eine schematische Skizze bezüglich des Einbaus des Druckreduzierventils im Bergbau.
- Figur 3: eine vergrößerte Wiedergabe des Übergangsbereiches der beiden Kolben und
- Figur 4: eine Seitensicht des Druckreduzierventil.

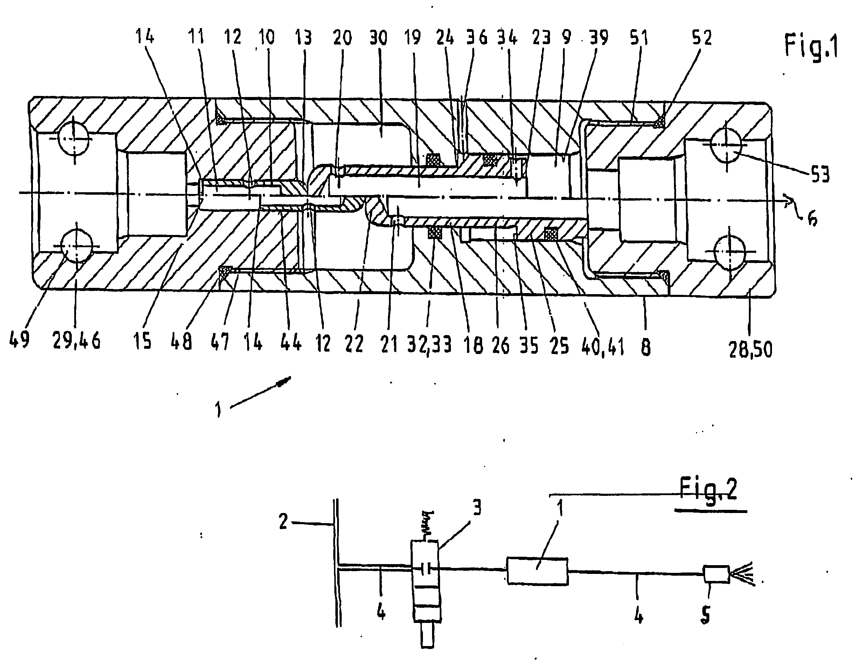

Zur Druckreduzierung einer Flüssigkeit ist das in Figur 1 gezeigte Ventil 1 vorgesehen. Dieses Ventil 1 wird gemäß Figur 2 in dem dort gezeigten Anwendungsbeispiel zwischen einem der Versorgungsleitung 2 zugeordneten Schaltventil 3 und einer Düse 5 in eine Zweigleitung 4 eingeschaltet, um dafür zu sorgen, dass die Düse 5 mit einem druckverringerten und mengenmäßig eingestellten Wasser oder einer sonstigen Flüssigkeit beschickt wird.

Wird das aus der Versorgungsleitung 2 mit beispielsweise 100 bar zuströmende Wasser über das Schaltventil 3 in die Zweigleitung 4 geleitet, sorgt das Ventil 1 dafür, dass das Druckwasser von 100 bar auf 20 bar heruntergeregelt wird und in einer Menge von etwa 1 bis 5 l in die Düse 5 hineinströmt. Eine derart eingestellt Staubdüse bringt beim Niederschlagen des Kohlen/Steinstaubes ungewöhnlich gute Ergebnisse. Dies wird durch die Druckreduzierung und die Einstellung der Wassermenge, die auf 1 - 30 l/Min., vorzugsweise 5 l/Min eingestellt ist, sichergestellt

Um den Druck entsprechend von 100 auf 20 bar zu reduzieren und die Menge entsprechend einzustellen, weist das Ventil 1 ein Ventilgehäuse 8 mit einer längs durchgehenden Durchgangsbohrung 9 auf. In dieser Durchgangsbohrung 9 ist in Strömungsrichtung 6 zunächst einmal ein Hochdruckteil 10 angeordnet und mit einer Axialbohrung 11 in Form einer Sackbohrung und Radialbohrungen 12 ausgerüstet. Der Kolbenkopf 13 liegt am Kolbenkopf 22 des Niederdruckteils 18 an. Das Anschlagende 14 sorgt dafür, dass der Hochdruckteil 10 in der ihm zugeordneten Bohrung bis zum Anschlagende verschoben werden kann.

Der Niederdruckteil 18 weist ebenfalls eine Axialbohrung 19 in Form einer Sackbohrung auf sowie mehrere Radialbohrungen 20, 21. Dieser Niederdruckteil 18 ist als Stufenkolben 24 ausgebildet, wobei die größere Stufe 25 ein Anschlagende 23 aufweist, während die kleinere Stufe 26 den Kolbenkopf 22 trägt, der am Kolbenkopf 13 des Hochdruckteils 10 anliegt. Diese Kopf-an-Kopf-Stellung erfolgt in einer Erweiterung 30 der Durchgangsbohrung 9, sodass die Druckflüssigkeit aus der Radialbohrung 12 in die Erweiterung 30 und von dort über die Radialbohrungen 20, 21 in den Niederdruckteil 18 einströmen kann. Dabei wird das Hochdruckwasser durch die Wahl der Durchmesser gezielt wie weiter oben erwähnt von 100 auf 20 bar reduziert, wobei auch andere Reduzierverhältnisse möglich sind.

Wird über das Schaltventil 3 der Zufluss des Hochdruckwassers zum Ventil 1 freigegeben, so wird der Hochdruckteil 10 aus seinem Sitz heraus in Richtung Niederdruckanschluss 28 verschoben, wobei er den Niederdruckteil 18 entsprechend verschiebt, bis dieser mit seinem Anschlagende 23 vor dem Niederdruckanschluss 28 bzw. der Muffenführung 50 steht. Das Hochdruckwasser strömt dann weiter durch die Zweigleitung 4 bis zur Düse 5, sodass sich nun der entsprechende Druck in der Zweigleitung 4 aufbaut, wodurch sich dann hinter dem Anschlagende 23 ein entsprechender Druck ergibt, der dafür sorgt, dass der Niederdruckteil 18 nun den Hochdruckteil 10 entgegen der Strömungsrichtung in die Durchgangsbohrung 9 verschiebt, bis das Anschlagende 14 vor dem Anschlag 15 der Durchgangsbohrung 9 steht. Das Hochdruckwasser kann nun durch die Radialbohrungen 12 in den Drosselspalt 44 eindringen, wo die gezielte Reduzierung der Menge vorgegeben wird, um dann über die Erweiterung 30, die Radialbohrung 20, 21 in die Axialbohrung 19 und damit in Richtung Düse 5, d. h. also in Strömungsrichtung 6 zu strömen.

Das "Öffnen" des Niederdruckteils 18 wird dadurch sichergestellt, dass am Anschlagende 23 eine Startradialbohrung 34 oder auch entsprechende Nuten vorgesehen sind, die dafür sorgen, dass Druckflüssigkeit immer in den Bereich des Anschlagendes 23 gelangt. Der in der Nut 32 angeordnete O-Ring 33 sichert, dass die Druckflüssigkeit nicht aus der Erweiterung 30 an der kleineren Stufe 26 entlang austreten kann. Die Nut 32 ist in der Wandung 39 der Durchgangsbohrung 9 ausgebildet, wobei der O-Ring 33 dann an der kleineren Stufe 26 entlang streicht und dafür sorgt, dass hier Druckflüssigkeit nicht passieren kann. Auch die größere Stufe 25 ist mit einer Dichtung 40 mit O-Ring 41 ausgerüstet, um zu verhindern, dass Druckflüssigkeit an der Startradialbohrung 34 entlang die größere Stufe 25 passieren kann.

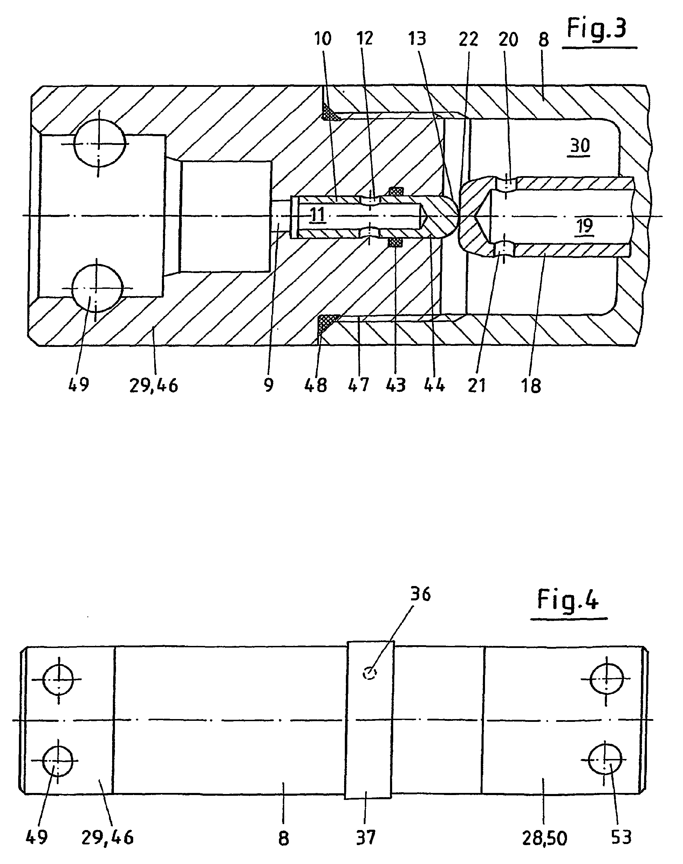

Zwischen der größeren Stufe 25 und der kleineren Stufe 26 ist ein Anschlag 35 ausgebildet und dort auch eine Belüftungsbohrung 36 vorgesehen, die dafür sorgt, dass die Bewegung des Niederdruckteils 18 in Form des Stufenkolbens 24 in seiner Bewegung nicht beeinträchtigt wird. Die Belüftungsbohrung 36 wird über einen Staubschutzverschluss gemäß Figur 4 so abgedichtet, dass Fremdstoffe nicht über die Belüftungsbohrung 36 in den Bereich der Oberflächen des Niederdruckteils 18 gelangen können.

Nach Figur 3 ist es auch möglich, den kleineren Hochdruckteil 10 mit einem O-Ring 43 zu versehen, um so ein geschlossenes bzw. abgedichtetes System zu schaffen. Die Druckflüssigkeit kann erst über den Drosselspalt 44 in Richtung Erweiterung 30 strömen, wenn dieser O-Ring 43 von den Radialbohrungen 12 überfahren ist.

Beidseitig des Gehäuses 8 sind Muffenführungen 46, 50 vorgesehen, um das Ventil 1 einfach in die Zweigleitung 4 einschließen zu können. Diese Muffenführungen 46, 50 verfügen über ein Gewinde 47, 51 und Dichtungen 48, 52, um so eine schnelle und sichere Verbindung mit dem Gehäuse 8 zu erreichen. Über den Steckanschluss 49, 53 ist eine schnelle und sichere Verbindung mit den Schlauchenden der Zweigleitung 4 möglich. Entsprechendes verdeutlicht sowohl Figur 1 wie auch Figur 4.

Im gezeigten Ausführungsbeispiel weist der Hochdruckteil 10 eine Axialbohrung 11 mit einem Durchmesser von 5 mm und zwei Radialbohrungen 12 mit einem Durchmesser von 2 mm auf.

Der größere Niederdruckteil 18 hat eine Axialbohrung 19 mit 10 - 14 mm Durchmesser und vier Radialbohrungen 20, 21 mit 2,7 mm Durchmesser.

## Patentansprüche

1. Ventil für die Druck- und Volumenstromreduzierung bei Druckflüssigkeitsverbrauchern des untertägigen Berg- und Tunnelbaus mit einem den Druck und die Menge reduzierende Teile (10, 18) in seiner Durchgangsbohrung (9) aufnehmenden Ventilgehäuse (8),
**dadurch gekennzeichnet,**
**dass** in der Durchgangsbohrung (9) des Ventilgehäuses (8) ein mehrteiliger Hochdruckteil (10) und Niederdruckteil (18) aufweisender Kolben (10, 18) verschieblich angeordnet ist, dessen Hochdruckteil (10) eine Axialbohrung (11) und mehrere Radialbohrungen (12) aufweist und in der Durchgangsbohrung (9) mit dieser einen bezüglich Länge und Breite vorgegebenen Drosselspalt (44) formend ausgebildet ist und dessen Niederdruckteil (18) dem Hochdruckteil (10) in Strömungsrichtung (6) nachgeordnet ist und eine Axialbohrung (19) und mehrere Radialbohrungen (20, 21) aufweist und als Stufenkolben (24) ausgebildet ist.

2. Ventil nach Anspruch 1,
**dadurch gekennzeichnet,**
**dass** der Hochdruckteil (10) und der Niederdruckteil (18) mit den Radialbohrungen (20, 21) mit ihren geschlossenen Kolbenköpfen (13, 22) aufeinander stehend in der Durchgangsbohrung (9) angeordnet sind.

3. Ventil nach Anspruch 1 und Anspruch 2,
**dadurch gekennzeichnet,**
**dass** der Niederdruckteil (18) und der Hochdruckteil (10) im Bereich einer Erweiterung (30) der Durchgangsbohrung (9) aufeinander stehend angeordnet sind, die eine dem Verschiebeweg des Niederdruckteils (18) entsprechende und das Weiterströmen der Druckflüssigkeit durch die Radialbohrungen (20, 21) sichernde Länge aufweist.

4. Ventil nach Anspruch 1,
**dadurch gekennzeichnet,**
**dass** der Niederdruckteil (18) mehr Radialbohrungen (20, 21) und damit einen größeren Öffnungsquerschnitt aufweist, als der Hochdruckteil (10).

5. Ventil nach Anspruch 1,
**dadurch gekennzeichnet,**
**dass** der Drosselspalt (44) zylindrisch und einen Hub von rund 10 mm zulassend ausgebildet ist.

6. Ventil nach Anspruch 1,
**dadurch gekennzeichnet,**
**dass** die größere Stufe (25) des Niederdruckteils (18) dem Niederdruckanschluss (28) zugeordnet ist.

7. Ventil nach Anspruch 6,
**dadurch gekennzeichnet,**
**dass** der Niederdruckteil (18) im Bereich der größeren Stufe (25) eine Nut (40) und einen O-Ring (41) aufweist.

8. Ventil nach Anspruch 1,
**dadurch gekennzeichnet,**
**dass** der Niederdruckteil (18) am dem Niederdruckanschluss (28) zugewandten Anschlagende (23) eine Startradialbohrung (34) oder eine Nut aufweist.

9. Ventil nach Anspruch 1,
**dadurch gekennzeichnet,**
**dass** zwischen den beiden hydraulischen Stufen (25, 26) des Stufenkolbens (24) eine radial verlaufende Belüftungsbohrung (36) vorgesehen ist.

10. Ventil nach Anspruch 9,
**dadurch gekennzeichnet,**
**dass** die Belüftungsbohrung (36) einen Staubschutzverschluss (37) aufweist.

11. Ventil nach Anspruch 1,
**dadurch gekennzeichnet,**
**dass** in die Wandung (39) der Durchgangsbohrung (9) eine die kleinere Stufe (26) des Niederdruckteils (18) abdichtende Dichtung (32) mit O-Ring (33) eingelassen ist.

12. Ventil nach Anspruch 1,
**dadurch gekennzeichnet,**
**dass** das Ventilgehäuse (8) mit der Durchgangsbohrung (9) beidseitig mit einer Muffenführung (46, 50) mit DN 10 Steckanschluss (49, 53) ausgerüstet ist.

13. Ventil nach Anspruch 1,
**dadurch gekennzeichnet,**
**dass** im Bereich des Drosselspaltes (44) ein von den Radialbohrungen (12) des Hochdruckteils überfahrbarer O-Ring (43) vorgesehen ist.

## Claims

1. A valve for reducing pressure and volume flow in pressure fluid consumers in underground mining and tunnelling, with a valve housing (8) which accommodates, in its through-bore (9), parts (10, 18) reducing the pressure and the quantity,
**characterized in that**
a multipart piston (10, 18) having a high-pressure part (10) and a low-pressure part (18) is disposed so as to be displaceable in the through-bore (9) of the valve housing (8), the high-pressure part (10) of which piston has an axial bore (11) and a plurality of radial bores (12) and is formed in the through-bore (9) so as to create with the latter a throttle gap (44) which is predetermined with regard to length and width, and the low-pressure part (18) of which piston is disposed downstream of the high-pressure part (10) in the flow direction and has an axial bore (19) and a plurality of radial bores (20, 21) and is formed as a stepped piston (24).

2. The valve according to Claim 1,
**characterized in that**
the high-pressure part (10) and the low-pressure part (18) with the radial bores (20, 21) are disposed with their closed piston heads (13, 22) standing one on top of the other in the through-bore (9).

3. The valve according to Claim 1 and Claim 2,
**characterized in that**
the low-pressure part (18) and the high-pressure part (10) are disposed standing one on top of the other in the region of a widening (30) of the through-bore (9), which is of a length which corresponds to the travel of the low-pressure part (18) and guarantees a continuing flow of the pressure fluid through the radial bores (20, 21).

4. The valve according to Claim 1,
**characterized in that**
the low-pressure part (18) has more radial bores (20, 21) and therefore a larger opening cross section than the high-pressure part (10).

5. The valve according to Claim 1,
**characterized in that**
the throttle gap (44) is formed in a cylindrical manner and so as to allow a stroke of approximately 10 mm.

6. The valve according to Claim 1,
**characterized in that**
the larger step (25) of the low-pressure part (18) is associated with the low-pressure connection (28).

7. The valve according to Claim 6,
**characterized in that**
the low-pressure part (18) has a groove (40) and an O-ring (41) in the region of the larger step (25).

8. The valve according to Claim 1,
**characterized in that**
the low-pressure part (18) has a starting radial bore (34) or a groove at the stop end (23), which faces the low-pressure connection (28).

9. The valve according to Claim 1,
**characterized in that**
a radially extending ventilation bore (36) is provided between the two hydraulic steps (25, 26) of the stepped piston (24).

10. The valve according to Claim 9,
**characterized in that**
the ventilation bore (36) has a dustproof closure (37).

11. The valve according to Claim 1,
**characterized in that**
a seal (32), which seals the smaller step (26) of the low-pressure part (18), with an O-ring (33) is inserted into the wall (39) of the through-bore (9).

12. The valve according to Claim 1,
**characterized in that**
the valve housing (8) with the through-bore (9) is equipped on both sides with a sleeve guide (46, 50) with a DN 10 plug-in connection (49, 53).

13. The valve according to Claim 1,
**characterized in that**
an O-ring (43), through which the radial bores (12) of the high-pressure part can pass, is provided in the region of the throttle gap (44).

## Revendications

1. Soupape pour la réduction de pression et de débit volumétrique pour les consommateurs de liquide sous pression dans le domaine de l'exploitation minière et construction de tunnels avec un boîtier de soupape (8) qui absorbe, dans son alésage de passage (9), des pièces (10, 18) qui réduisent la pression et la quantité,
**caractérisée en ce que**
est disposé de manière mobile dans l'alésage de passage (9) du boîtier de soupape (8) un piston (10, 18) en plusieurs pièces qui présente une partie haute pression (10) et une partie basse pression (18), piston dont la partie haute pression (10) présente un alésage axial (11) et plusieurs alésages radiaux (12) et est formé de manière à constituer dans l'alésage de passage (9) avec ce dernier une fente d'étranglement (44) de longueur et largeur prescrites, et dont la partie basse pression (18) est disposée en aval de la partie haute pression (10) dans le sens d'écoulement (6) et présente un alésage axial (19) et plusieurs alésages radiaux (20, 21) et est formé comme piston à gradins (24).

2. Soupape selon la revendication 1,
**caractérisée en ce que**
la partie haute pression (10) et la partie basse pression (18) avec les alésages radiaux (20, 21) sont disposées avec leurs têtes de piston (13, 22) fermées l'une au-dessus de l'autre dans l'alésage de passage (9).

3. Soupape selon les revendications 1 et 2,
**caractérisée en ce que**
la partie basse pression (18) et la partie haute pression (10) sont disposées l'une au-dessus de l'autre au niveau d'une extension (30) de l'alésage de passage (9), alésage de passage qui a une longueur correspondant à la course de déplacement de la partie basse pression (18) et garantit le maintien du flux du liquide sous pression par des alésages radiaux (20, 21).

4. Soupape selon la revendication 1,
**caractérisée en ce que**
la partie basse pression (18) présente un plus grand nombre d'alésages radiaux (20, 21) et, ainsi, une plus grande section d'ouverture que la partie haute pression (10).

5. Soupape selon la revendication 1,
**caractérisée en ce que**
la fente d'étranglement (44) a la forme cylindrique et permet une course d'environ 10 mm.

6. Soupape selon la revendication 1,
**caractérisée en ce que**
le plus grand gradin (25) de la partie basse pression (18) est affecté au raccord basse pression (28).

7. Soupape selon la revendication 6,
**caractérisée en ce que**
que la partie basse pression (18) présente au niveau du plus grand gradin (25) une rainure (40) et un joint torique (41).

8. Soupape selon la revendication 1,
**caractérisée en ce que**
la partie basse pression (18) présente à l'extrémité-butée (23) orientée vers le raccord basse pression (28) un alésage radial de départ (34) ou une rainure.

9. Soupape selon la revendication 1,
**caractérisée en ce que**
un alésage d'aération (36) radial est prévu entre les deux gradins hydrauliques (25, 26) du piston à gradins (24).

10. Soupape selon la revendication 9,
**caractérisée en ce que**
l'alésage d'aération (36) présente un raccord de protection contre la poussière (37).

11. Soupape selon la revendication 1,
**caractérisée en ce que**
une garniture d'étanchéité (32) avec joint torique (33) qui étanchéifie le plus petit gradin (26) de la partie basse pression est encastrée dans la paroi (39) de l'alésage de passage (9).

12. Soupape selon la revendication 1,
**caractérisée en ce que**
le boîtier de soupape (8) avec l'alésage de passage (9) est équipé sur les deux côtés d'un guide-manchon (46, 50) avec raccord embrochable (49, 53) DN 10.

13. Soupape selon la revendication 1,
**caractérisée en ce que**
un joint torique (43) pouvant être traversé par les alésages radiaux (12) de la partie haute pression est prévu au niveau de la fente d'étranglement (44).
